(19) Europäisches Patentamt
European Patent Office
Office européen des brevets

(11) **EP 3 392 070 A1**

(12) **EUROPÄISCHE PATENTANMELDUNG**

(43) Veröffentlichungstag:
**24.10.2018 Patentblatt 2018/43**

(51) Int Cl.:
**B60K 1/04** *(2006.01)* **H01M 2/10** *(2006.01)*
**H01M 10/42** *(2006.01)* **H01M 10/48** *(2006.01)*

(21) Anmeldenummer: **18160953.8**

(22) Anmeldetag: **09.03.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **20.04.2017 DE 102017206663**

(71) Anmelder: **Robert Bosch GmbH**
**70442 Stuttgart (DE)**

(72) Erfinder: **Allgeier, Jan**
**76137 Karlsruhe (DE)**

(54) **BATTERIEPACK UND ELEKTROFAHRZEUG**

(57) Die Erfindung betrifft Batteriepack, umfassend mehrere in einem Batteriegehäuse (40) angeordnete Batteriezellen, wobei das Batteriegehäuse (40) mindestens eine elektrisch isolierend ausgebildete Schutzplatte (42) aufweist, mindestens einen Deformationssensor (70), der eine elektrisch leitfähige Beschichtung umfasst, welche auf die Schutzplatte (42) aufgebracht ist, und mindestens eine Auswerteschaltung zur Erkennung einer Widerstandsänderung des mindestens einen Deformationssensors (70). Dabei ist eine Mehrzahl von Deformationssensoren (70) vorgesehen, und die Deformationssensoren (70) sind in separaten Segmenten (80) der Schutzplatte (42) angeordnet. Die Erfindung betrifft auch ein Elektrofahrzeug, welches mindestens ein erfindungsgemäßes Batteriepack umfasst.

**Fig. 1**

**Beschreibung**

Die Erfindung betrifft ein Batteriepack, welches mehrere in einem Batteriegehäuse angeordnete Batteriezellen, wobei das Batteriegehäuse mindestens eine elektrisch isolierend ausgebildete Schutzplatte aufweist, mindestens einen Deformationssensor, der eine elektrisch leitfähige Beschichtung umfasst, welche auf die Schutzplatte aufgebracht ist, und mindestens eine Auswerteschaltung zur Erkennung einer Widerstandsänderung des mindestens einen Deformationssensors umfasst. Die Erfindung betrifft auch ein Elektrofahrzeug, welches mindestens ein erfindungsgemäßes Batteriepack umfasst.

Stand der Technik

Es zeichnet sich ab, dass in Zukunft insbesondere in Fahrzeugen wie Elektrofahrzeugen (EV), Hybridfahrzeugen (HEV) oder Plug-In-Hybridfahrzeugen (PHEV) sowie in stationären Anlagen und in Consumer-Elektronik-Produkten vermehrt Batteriesysteme zum Einsatz kommen werden, an welche hohe Anforderungen bezüglich Zuverlässigkeit, Leistungsfähigkeit, Sicherheit und Lebensdauer gestellt werden. Für solche Anwendungen eignen sich insbesondere Batteriesysteme mit Lithium-Ionen-Batteriezellen. Diese zeichnen sich unter anderem durch hohe Energiedichten, thermische Stabilität und eine äußerst geringe Selbstentladung aus.

Batteriesysteme mit Lithium-Ionen-Batteriezellen weisen hohe Anforderungen bezüglich der funktionalen Sicherheit auf. Ein nicht sachgemäßer Betrieb der Batteriezellen kann zu exothermen Reaktionen bis hin zum Brand und/oder zur Entgasung führen. Insbesondere kann ein Brand oder eine Explosion entstehen, wenn ein Metallteil in eine Batteriezelle eindringt. Aber auch eine Verformung eines Zellgehäuses einer Batteriezelle kann bereits eine exotherme Reaktion auslösen.

Mehrere Batteriezellen werden elektrisch verschaltet und zu Batteriemodulen oder zu Batteriepacks verbunden. Die einzelnen Batteriezellen werden sowohl seriell als auch parallel verschaltet. Ein derartiges Batteriepack umfasst dabei ein Batteriegehäuse, in welchem die einzelnen zugehörigen Batteriezellen angeordnet sind. In Elektrofahrzeugen werden Batteriepacks in der Regel im Unterboden untergebracht, wodurch der Schwerpunkt des Elektrofahrzeugs tiefer liegt, und was aufgrund der großen, zusammenhängend verfügbaren Fläche vorteilhaft ist.

Ein Batteriegehäuse eines Batteriepacks weist dabei Schutzplatten auf, welche nach unten weisen und das Batteriegehäuse schützen. Derartige Schutzplatten umfassen beispielsweise eine mehrlagige Abdeckung aus Titan und Aluminium. Überfahrene oder auf der Fahrbahn liegende und hochgeschleuderte Objekte können jedoch die Schutzplatten des Batteriepacks verformen oder durchschlagen. Dadurch kann es zu einer Beschädigung der Batteriezellen kommen.

Eine Verformung oder ein Durchschlag eines Batteriegehäuses wird eventuell durch ein Batteriemanagementsystem nicht unmittelbar detektiert, da die betroffenen Batteriezellen noch nicht merklich beschädigt sind. Eventuell sind die Batteriezellen allerdings so beschädigt, dass ein baldiger Ausfall zu befürchten ist oder Isolationsanforderungen oder sonstige Sicherheitsanforderungen nicht mehr eingehalten werden.

Aus der US 2013/0089765 A1 ist eine Batterie bekannt, welche ein äußeres Hüllmaterial aufweist. An einer dehnungsfähigen Oberfläche des Hüllmaterials ist ein Verformungssensor angeordnet. Der Verformungssensor beinhaltet eine Sensormembran und leitfähige Füllkörper. In der Sensormembran ist ein leitfähiger Pfad gebildet. Bei einer Verformung der Sensormembran verändert sich ein elektrischer Widerstand.

Die US 2006/093896 A1 offenbart eine Batterie, die ein Gehäuse aufweist. An eine Oberfläche des Gehäuses ist ein Sicherheitselement angebracht. Bei einem

Anschwellen des Gehäuses ändert sich ein elektrischer Widerstand des Sicherheitselements.

Die US 2014/106184 A1 offenbart eine Batterie, welche eine Batteriezelle, ein geerdetes Gehäuse und einen Widerstandsdraht, der zwischen der Batteriezelle und dem Gehäuse angeordnet ist, aufweist. Bei einer Verformung des Gehäuses gelangt der Widerstandsdraht in Kontakt mit dem geerdeten Gehäuse und der Widerstandsdraht wird kurzgeschlossen.

Offenbarung der Erfindung

Es wird ein Batteriepack vorgeschlagen, welches mehrere in einem Batteriegehäuse angeordnete Batteriezellen umfasst. Dabei weist das Batteriegehäuse mindestens eine elektrisch isolierend ausgebildete Schutzplatte auf. Das Batteriepack umfasst ferner mindestens einen Deformationssensor, der eine elektrisch leitfähige Beschichtung umfasst, welche auf die Schutzplatte des Batteriegehäuses aufgebracht ist. Auch umfasst das Batteriepack mindestens eine Auswerteschaltung zur Erkennung einer Widerstandsänderung des mindestens einen Deformationssensors.

Erfindungsgemäß ist eine Mehrzahl von Deformationssensoren vorgesehen, und die Deformationssensoren sind in separaten Segmenten der Schutzplatte angeordnet. Die einzelnen Segmente der Schutzplatte können dabei gleiche Größe und gleiche Form aufweisen. Die einzelnen Segmente der Schutzplatte können auch unterschiedlich ausgebildet sein.

Gemäß einer vorteilhaften Ausgestaltung der Erfindung ist jeder der Deformationssensoren des Batteriepacks mit einer separaten eigenen Auswerteschaltung verbunden.

Gemäß einer anderen vorteilhaften Ausgestaltung der Erfindung sind mehrere Deformationssensoren des Batteriepacks, insbesondere alle Deformationssensoren des Batteriepacks, mit einer gemeinsamen Auswerteschaltung verbunden.

Dabei fragt die gemeinsame Auswerteschaltung des Batteriepacks die verbundenen Deformationssensoren des Batteriepacks abwechselnd, vorzugsweise zyklisch, ab.

Die elektrisch leitfähige Beschichtung der Deformationssensoren ist vorteilhaft aus einem Material oder einer Legierung mit einem verhältnismäßig niedrigen Temperaturkoeffizient gefertigt. Vorzugsweise ist die elektrisch leitfähige Beschichtung der Deformationssensoren aus Konstantan gefertigt, also aus einer Legierung, die Kupfer, Nickel und Mangan aufweist.

Gemäß einer bevorzugten Ausgestaltung der Erfindung ist die elektrisch leitfähige Beschichtung der Deformationssensoren eine Leiterbahn, die sich zwischen einer ersten Klemme und einer zweiten Klemme innerhalb eines Segments der Schutzplatte des Batteriegehäuses erstreckt.

Gemäß einer bevorzugten Weiterbildung der Erfindung ist die elektrisch leitfähige Beschichtung der Deformationssensoren von einer Isolationsschicht abgedeckt, welche auf die Schutzplatte des Batteriegehäuses aufgebracht ist. Die Isolationsschicht ist gleichzeitig eine Schutzschicht und ist beispielsweise als Folie, Harz oder Lack ausgeführt. Die Isolationsschicht kann auch mehrere Deformationssensoren des Batteriepacks, insbesondere alle Deformationssensoren des Batteriepacks, abdecken.

Es wird auch ein Elektrofahrzeug vorgeschlagen, welches mindestens ein erfindungsgemäßes Batteriepack umfasst.

Vorzugsweise ist das Batteriepack des Elektrofahrzeugs so angeordnet, dass die Schutzplatte des Batteriegehäuses in Gravitationsrichtung nach unten weist. Somit weisen auch die Deformationssensoren des Batteriepacks nach unten, also auf eine Oberfläche einer Fahrbahn zu, auf welcher das erfindungsgemäße Elektrofahrzeug sich befindet.

Vorteile der Erfindung

Die Erfindung gestattet eine Erweiterung des passiven Schutzes eines Batteriepacks durch aktive Überwachung des Zustandes der Schutzplatte des Batteriegehäuses. Eine Verformung oder ein Durchschlag der Schutzplatte des Batteriegehäuses wird bei einem erfindungsgemäßen Batteriepack mit hoher Wahrscheinlichkeit detektiert. Insbesondere, wenn das Batteriepack in einem Elektrofahrzeug eingebaut ist, wird somit eine Beschädigung der Fahrzeugbatterie sicher und schnell erkannt. Der Fahrer oder Benutzer des Elektrofahrzeugs kann dann umgehend über eine solche Beschädigung informiert werden. Abhängig vom erkannten Ausmaß der Beschädigung kann der Fahrer beispielsweise angewiesen werden, das Fahrzeug sofort zu verlassen oder umgehend eine Werkstatt aufzusuchen. Zusätzlich können geeignete Notmaßnamen eingeleitet werden, beispielsweise ein erweiterter Selbsttest der Batteriezellen, eine Abtrennung des Batteriesegmentes, in welchem die Beschädigung detektiert wurde, oder eine vorbeugende Einstellung des Kühlsystems auf maximale Kühlleistung, um dadurch die Gefahr eines Brands des Batteriepacks zu reduzieren. Somit trägt die Erfindung zur Erhöhung der Sicherheit und Zuverlässigkeit des Elektrofahrzeuges oder allgemein eines mobilen Energiespeichers bei.

Kurze Beschreibung der Zeichnungen

Ausführungsformen der Erfindung werden anhand der Zeichnungen und der nachfolgenden Beschreibung näher erläutert.

Es zeigen:

Figur 1    eine Draufsicht auf eine Schutzplatte eines Batteriegehäuses eines Batteriepacks,

Figur 2    eine vergrößerte Darstellung eines Deformationssensors und

Figur 3    eine schematische Darstellung eines Elektrofahrzeugs mit dem Batteriepack von Figur 1.

Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

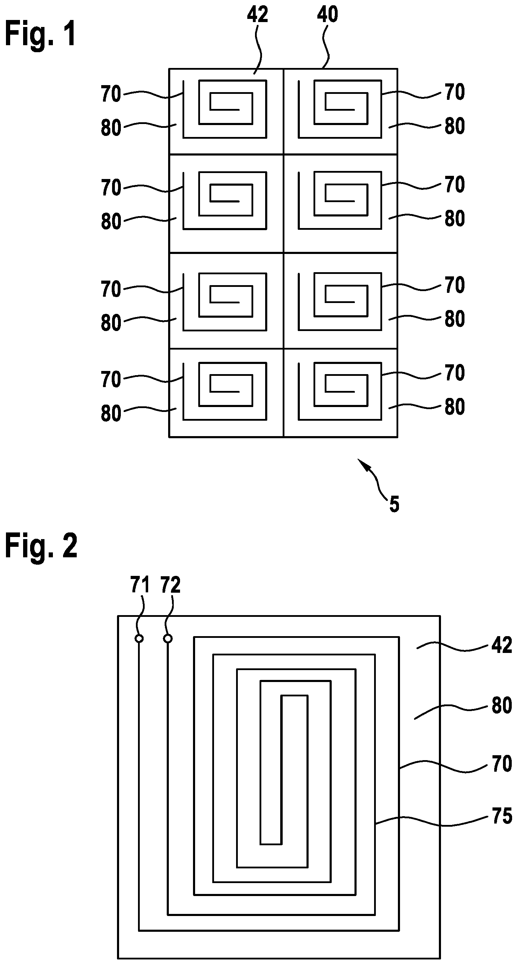

Figur 1 zeigt eine Draufsicht auf eine Schutzplatte 42 eines Batteriegehäuses 40 eines Batteriepacks 5. In dem Batteriegehäuse 40 sind mehrere Batteriezellen angeordnet, welche hier nicht dargestellt sind. Das Batteriegehäuse 40 umschließt einen entsprechend großen Innenraum, welcher zur Aufnahme der Batteriezellen vorgesehen ist. Der besagte Innenraum in dem Batteriegehäuse 40 wird von der Schutzplatte 42 geschlossen.

Die Schutzplatte 42 des Batteriegehäuses 40 ist elektrisch isolierend ausgebildet. Die Schutzplatte 42 kann dabei massiv aus einem elektrisch nicht-leitenden Material, beispielweise einem Kunststoff, gefertigt sein. Alternativ kann die Schutzplatte 42 auch aus einem Metall gefertigt sein, welches mit einer elektrisch isolierenden Schicht, insbesondere einer Kunststoffschicht, überzogen ist. Wesentlich ist dabei, dass eine Oberfläche der Schutzplatte 42, welche von dem Innenraum des Batteriegehäuses 40 abgewandt ist, elektrisch isolierend ausgebildet ist. Auch eine dem Innenraum und den Batteriezellen zugewandte Oberfläche der Schutzplatte 42 kann elektrisch isolierend ausgebildet sein.

Die Schutzplatte 42 des Batteriegehäuses 40 ist in mehrere Segmente 80 unterteilt. Beispielhaft sind acht Segmente 80 vorgesehen, wobei alle acht Segmente 80 gleich groß sind und rechteckig ausgebildet sind. Jedes der Segmente 80 der Schutzplatte 42 umfasst einen Deformationssensor 70. Jeder Deformationssensor 70 ist mit einer hier nicht dargestellten Auswerteschaltung verbunden.

Der Deformationssensor 70 ist dazu geeignet, eine Änderung einer Fläche AS eines Segments 80 zu detektieren. In dem hier gezeigten Beispiel hat die Schutzplatte 42 beispielsweise eine Breite von 1,7 m und eine Länge von 2 m. Für eine Fläche AS eines Segments 80 der Schutzplatte 42 gilt dann:

$$AS = 1/8 * 1,7 \text{ m} * 2 \text{ m} = 0,425 \text{ m}^2$$

Figur 2 zeigt eine vergrößerte Darstellung eines Deformationssensors 70, welcher aus Figur 1 bekannt ist. Der Deformationssensor 70 ist, wie bereits erwähnt, in einem Segment 80 der Schutzplatte 42 angeordnet. Der Deformationssensor 70 umfasst eine elektrisch leitfähige Beschichtung 75, welche auf die Schutzplatte 42 aufgebracht ist. Die elektrisch leitfähige Beschichtung 75 ist eine Leiterbahn, welche sich zwischen einer ersten Klemme 71 und einer zweiten Klemme 72 innerhalb des Segments 80 erstreckt. Die Leiterbahn ist dabei in mehreren Windungen innerhalb des Segments 80 verlegt. Über die erste Klemme 71 und die zweite Klemme 72 ist der Deformationssensor 70 mit der hier nicht dargestellten Auswerteschaltung verbunden. Die elektrisch leitfähige Beschichtung 75 ist aus einem Material mit einem verhältnismäßig geringen Temperaturkoeffizient gefertigt, vorliegend aus Konstantan.

Die Auswerteschaltung erkennt einen ohmschen Widerstand der Beschichtung 75 des Deformationssensors 70. Bei einer Deformation des Segments 80 erfolgt eine Verformung der Beschichtung 75. Dadurch erfolgt auch eine Änderung des ohmschen Widerstands der Beschichtung 75 und damit auch eine Änderung des ohmschen Widerstands des Deformationssensors 70. In erster Näherung ist der ohmsche Widerstand des Deformationssensors 70 proportional zu einer Fläche AS des Segments 80.

Die Auswerteschaltung misst in regelmäßigen Zeitabständen den ohmschen Widerstand der Beschichtung 75 des Deformationssensors 70. Solange keine signifikante Änderung des ohmschen Widerstandes außerhalb von langsamer verlaufenden, kompensierbaren Temperatureffekten und Alterungseffekten feststellbar ist, ist davon auszugehen, dass keine Deformation des Segments 80 vorliegt.

Im Folgenden wird die Erkennung einer Deformation des Segments 80 anhand eines Zahlenbeispiels dargestellt. Es wird dabei davon ausgegangen, dass eine Fläche in der Größe von 5 cm x 5 cm des Segments 80 eine Deformation erfährt und danach auf eine Fläche von 7 cm x 7 cm vergrößert wurde. Eine absolute Flächenänderung DA ergibt sich dann zu:

$$DA = (0,07 \text{ m})^2 - (0,05 \text{ m})^2 = 0,0024 \text{ m}^2$$

Für eine relative Flächenänderung DArel des Segments 80 ergibt sich dann annähernd:

$$DArel = (0,425 \text{ m}^2 + 0,0024 \text{ m}^2) / (0,425 \text{ m}^2) = 1,0056$$

Die Änderung des ohmschen Widerstandes des Deformationssensors 70 ist, wie bereits erwähnt, proportional zu der relativen Flächenänderung DArel des Segments 80. Für einen ohmschen Widerstand R2 des Deformationssensors 70 nach der Deformation in Abhängigkeit von einem ohmschen Widerstand R1 des Deformationssensors 70 vor der Deformation gilt:

$$R2 = DArel * R1 = 1{,}0056 * R1$$

Für eine relative Widerstandsänderung DRrel des Deformationssensors 70 gilt somit:

$$DRrel = (R2 - R1) / R1 = (1{,}0056 * R1 - R1) / R1 = 0{,}0056 = 0{,}56\ \%$$

Der absolute Wert des ohmschen Widerstandes des Deformationssensors 70 ist zur Erkennung einer Deformation des Segments 80 nicht zwingend relevant. Wichtig ist nur, dass die Auswerteschaltung eine Änderung des ohmschen Widerstands des Deformationssensors 70 in verhältnismäßig kurzer Zeit erfassen und auswerten kann. An die absolute Genauigkeit der Auswerteschaltung werden somit keine besonderen Anforderungen gestellt.

Falls die Deformation des Segments 80 so stark ist, dass ein Riss innerhalb des Segments 80 der Schutzplatte 42 entsteht, wobei durch diesen Riss die leitfähige Beschichtung 75 des Deformationssensors 70 unterbrochen wird, so ist der ohmsche Widerstand des Deformationssensors 70 annähernd unendlich. Das bedeutet, der ohmsche Widerstand des Deformationssensors 70 ist in diesem Fall deutlich angewachsen, was die Auswerteschaltung detektieren kann.

Im vorliegenden Beispiel ist jeder der Deformationssensoren 70 mit einer separaten Auswerteschaltung verbunden. Alternativ dazu können auch mehrere Deformationssensoren 70 mit einer gemeinsamen Auswerteschaltung verbunden sein. Dazu sind die einzelnen Deformationssensoren 70 beispielsweise über einen Multiplexer mit der gemeinsamen Auswerteschaltung verbunden. Die Auswerteschaltung kann in diesem Fall die Deformationssensoren 70 insbesondere zyklisch abfragen.

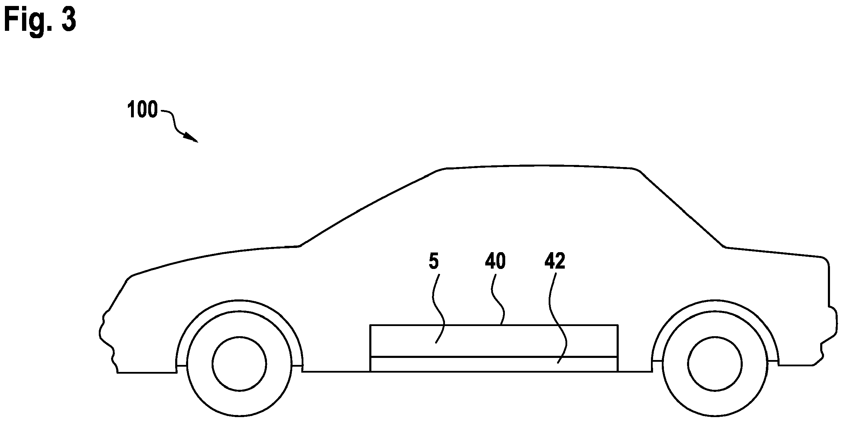

Figur 3 zeigt eine schematische Darstellung eines Elektrofahrzeugs 100 mit dem Batteriepack 5 von Figur 1. Das Batteriepack 5, welches das Batteriegehäuse 40 aufweist, ist dabei in einem Unterboden des Elektrofahrzeugs 100 angeordnet. Das Batteriepack 5 ist derart in dem Elektrofahrzeug 100 angeordnet, dass die Schutzplatte 42 des Batteriegehäuses 40 nach unten weist, also auf eine Oberfläche einer Fahrbahn zu, auf welcher das Elektrofahrzeug 100 sich befindet.

Wenn nun bei der Fahrt des Elektrofahrzeugs 100 ein auf der Fahrbahn liegender Gegenstand gegen die Schutzplatte 42 geschleudert wird, so kann dieser Gegenstand eine Deformation eines Segments 80 der Schutzplatte 42 verursachen. Die Auswerteschaltung, welche mit dem Deformationssensor 70 des betreffenden Segments 80 verbunden ist, detektiert in diesem Fall eine Änderung des ohmschen Widerstandes des Deformationssensors 70. In diesem Fall kann an den Fahrer des Elektrofahrzeugs 100 eine entsprechende Warnung ausgegeben werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Batteriepack (5), umfassend
   mehrere in einem Batteriegehäuse (40) angeordnete Batteriezellen, wobei
   das Batteriegehäuse (40) mindestens eine elektrisch isolierend ausgebildete Schutzplatte (42) aufweist,
   mindestens einen Deformationssensor (70), der eine elektrisch leitfähige Beschichtung (75) umfasst, welche auf die Schutzplatte (42) aufgebracht ist, und
   mindestens eine Auswerteschaltung zur Erkennung einer Widerstandsänderung des mindestens einen Deformationssensors (70), **dadurch gekennzeichnet, dass**
   eine Mehrzahl von Deformationssensoren (70) vorgesehen ist, und dass die Deformationssensoren (70) in separaten Segmenten (80) der Schutzplatte (42) angeordnet sind.

2. Batteriepack (5) nach Anspruch 1, **dadurch gekennzeichnet, dass** jeder Deformationssensor (70) mit einer separaten Auswerteschaltung verbunden ist.

3. Batteriepack (5) nach Anspruch 1, **dadurch gekennzeichnet, dass** mehrere Deformationssensoren (70) mit einer gemeinsamen Auswerteschaltung verbunden sind.

4. Batteriepack (5) nach Anspruch 3, **dadurch gekennzeichnet, dass** die gemeinsame Auswerteschaltung die verbundenen Deformationssensoren (70) zyklisch abfragt.

**5.** Batteriepack (5) nach einem der vorstehenden Ansprüche, **dadurch gekennzeichnet, dass** die elektrisch leitfähige Beschichtung (75) aus Konstantan oder einer anderen metallischen Legierung mit niedrigem Temperaturkoeffizienten gefertigt ist.

**6.** Batteriepack (5) nach einem der vorstehenden Ansprüche, **dadurch gekennzeichnet, dass** die elektrisch leitfähige Beschichtung (75) eine Leiterbahn ist, die sich zwischen einer ersten Klemme (71) und einer zweiten Klemme (72) innerhalb eines Segments (80) erstreckt.

**7.** Batteriepack (5) nach einem der vorstehenden Ansprüche, **dadurch gekennzeichnet, dass** die elektrisch leitfähige Beschichtung (75) von einer Isolationsschicht abgedeckt ist.

**8.** Elektrofahrzeug (100), umfassend mindestens ein Batteriepack (5) nach einem der vorstehenden Ansprüche.

**9.** Elektrofahrzeug (100) nach Anspruch 8, wobei das Batteriepack (5) so angeordnet ist, dass die Schutzplatte (42) des Batteriegehäuses (40) in Gravitationsrichtung nach unten weist.

# Fig. 1

# Fig. 2

**Fig. 3**

EP 3 392 070 A1

Europäisches
Patentamt

European
Patent Office

Office européen
des brevets

# EUROPÄISCHER RECHERCHENBERICHT

Nummer der Anmeldung

EP 18 16 0953

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/065453 A1 (SCHAEFER TIM [DE] ET AL) 6. März 2014 (2014-03-06) * Seite 5, Absatz 0057 - Seite 7, Absatz 0090; Abbildungen 1-4 * ----- | 1-9 | INV. B60K1/04 H01M2/10 H01M10/42 H01M10/48 |
| X | DE 10 2011 013182 A1 (SCHOPF WALTER [DE]) 6. September 2012 (2012-09-06) * Seite 2, Absatz 0011 - Seite 6, Absatz 0028; Abbildungen 1-3 * ----- | 1,2,4,5, 8,9 | |

RECHERCHIERTE
SACHGEBIETE (IPC)

B60K
H01M

Der vorliegende Recherchenbericht wurde für alle Patentansprüche erstellt

| Recherchenort | Abschlußdatum der Recherche | Prüfer |
|---|---|---|
| München | 7. August 2018 | Polisski, Sergej |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 16 0953

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2018

| Im Recherchenbericht angeführtes Patentdokument | Datum der Veröffentlichung | Mitglied(er) der Patentfamilie | Datum der Veröffentlichung |
|---|---|---|---|
| US 2014065453 A1 | 06-03-2014 | US 2014062410 A1<br>US 2014065453 A1<br>WO 2014032767 A2<br>WO 2014032768 A1 | 06-03-2014<br>06-03-2014<br>06-03-2014<br>06-03-2014 |
| DE 102011013182 A1 | 06-09-2012 | KEINE | |

Für nähere Einzelheiten zu diesem Anhang : siehe Amtsblatt des Europäischen Patentamts, Nr.12/82

EPO FORM P0461

**EP 3 392 070 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130089765 A1
- US 2006093896 A1
- US 2014106184 A1